# EUROPEAN PATENT SPECIFICATION

(11) **EP 1 685 009 B1**
(45) Date of publication and mention of the grant of the patent: **16.07.2008**
(21) Application number: 04806294.7
(22) Date of filing: 19.11.2004
(51) Int. Cl.: B60R 21/20, B29C 44/14, B29C 44/12, B29C 39/10

(54) **APPARATUS AND METHOD FOR POSITIONING REINFORCEMENT MATERIAL WITHIN AN INTERIOR TRIM PANEL**
VORRICHTUNG UND VERFAHREN ZUR POSITIONIERUNG VON VERSTÄRKUNGSMATERIAL IN EINER INNENVERKLEIDUNGSPLATTE
APPAREIL ET PROCEDE DE POSITIONNEMENT D'UN MATERIAU DE RENFORCEMENT DANS UN PANNEAU DE GARNITURE INTERNE

(30) Priority: 20.11.2003 GB 0327065
(43) Date of publication of application: 02.08.2006
(73) Proprietor: Intier Automotive Interiors Ltd, Maidstone, Kent ME15 9XT (GB)
(72) Inventor: DEEKS, Alan, Robert, Essex RM14 1LH (GB)
(74) Representative: Pfiz, Thomas
(86) International application number: PCT/IB2004/003800
(87) International publication number: WO 2005/049391

(56) References cited:
- EP-A- 0 872 389
- DE-A1- 10 231 567
- US-A- 5 108 128
- US-A- 6 092 835
- US-B1- 6 205 728

## Description

### BACKGROUND OF THE INVENTION

### Field of the Invention

The invention relates in general to molding of a trim component, and in particular, to an apparatus and method for consistently and accurately positioning a reinforcement material, such as a scrim material, within a layer of material of an interior trim panel.

### Description of the Related Art

Inflatable restraint systems that protect passengers are located in trim panels, such as instrument panels, in front or to the side of passengers in a vehicle. Typically, the inflatable restraint system includes an air bag that is enclosed within a storage receptacle, which is typically mounted behind an interior trim piece, such as a steering wheel cover in the case of the driver's side air bag, or a section of the instrument panel, in the case of the passenger's side air bag. In some vehicles, side impact air bags are also provided in some or all of the vehicle doors.

One or more air bag deployment doors normally overlie the air bag receptacle and are forced open when the air bag is inflated to allow deployment of the air bag through the opening created by the door panel movement. However, automotive interior trim substrates and covering materials, such as plastics, are relatively tough and difficult to sever. Thus, a predetermined severing pattern may be necessary for proper opening of the airbag door in the trim panel.

One mechanism for insuring proper opening of the trim cover in an "invisible seam" installation in which the deployment airbag door pattern is totally invisible to a person seated in the vehicle is by performing a secondary operation, such as laser cutting or scoring, to pre-weaken the trim cover. However, laser scoring of the trim cover from the inside, if not done accurately, can over time become at least faintly visible causing "witness lines" from the exterior of the trim piece. Thus, fabrication of the automotive interior trim pieces, particularly for invisible seam applications, is thus a difficult manufacturing challenge.

To achieve a high level of capability required to manufacture safety critical items, such as integrated invisible airbag doors in instrument panels or the like, it is necessary to demonstrate repeatability of all steps of the process. In addition, to achieve the opening of an airbag door at a range of temperatures without fragmentation, it is desirable to reinforce the airbag door area with a mesh, fabric, scrim, or other type of reinforcement material, which may also provide a hinge or tether when the door opens with the force of the airbag deployment. Typically, the trim component, such as an instrument panel, is comprised of carrier layer or substrate, an optional layer of foam material, and a cover material visible to the occupant.

In order to demonstrate the repeatability of the process steps, it must be shown that the reinforcement material can be encapsulated consistently in the desired position from one manufactured trim component to the next manufactured trim component during the molding process. In the manufacture of an instrument panel, for example, an inaccuracy of the placement of the reinforcement material may result in the reinforcement material not to be positioned immediately adjacent to the desired pre-weakening of the substrate or trim covering material. In addition, the reinforcement material may migrate within the substrate toward an exterior surface during the molding process, thereby increasing the probability of "read-through" of the reinforcement material.

One current method of positioning the reinforcement material is to utilize pins within the instrument panel substrate molding tool that will accept punched holes in the reinforcement material. One problem with this method is that all of the surface shapes required by the instrument panel stylist are difficult to accommodate. In addition, this method only positions the reinforcement material accurately in one plane, and only at the positions of the punched holes, thereby allowing the injected material to distort the reinforcement material at other locations.

US-A-6 092 835 discloses an automotive instrument panel according to the preamble of patent claim 1. According to this document, a steel door is mounted directly on a plastic moulded substrate of the instrument panel and firmly held in place. A foam layer is applied between the substrate and the covering and thus does not affect the positioning of the door in the final product.

Thus, there is a need to provide a method for positioning a reinforcement material, such as a scrim material or the like, consistently in three dimensions within a trim component, such as an instrument panel, during an injection molding process. There is also a need to position the reinforcement material within the substrate material in such a way that secondary operations, such as laser scoring, can be eliminated by the use of alternative methods to promote tearing of the foam and/or covering materials.

### SUMMARY OF THE INVENTION

The inventor of the present invention has recognized these and other problems associated with manufacturing a trim component having a reinforcement material and has developed a method and apparatus for alleviating such problems. Specifically, the inventor of the present invention has developed a cassette comprising a frame member and a reinforcement material held in place by the frame member, wherein said reinforcement material extending across a hinge line and into an extension area, said reinforcement material in said extension area having one or more holes for aligning the cassette such that the reinforcement material is positioned at a predetermined location when said cassette is placed in a mold tool.

### BRIEF DESCRIPTION OF THE DRAWINGS

In the drawings:

Figure 1 shows a top view of a cassette for positioning a reinforcement material according to an embodiment of the invention.

Figure 2 shows a cross sectional view of an embodiment of the cassette taken along line 2-2 of Figure 1.

Figure 3 shows an enlarged view of an alternate embodiment of the frame member illustrating the reinforcement material being encapsulated by the frame member of the cassette.

Figure 4 shows another enlarged view of another alternate embodiment of the frame member illustrating the reinforcement material being encapsulated by the frame member of the cassette.

Figure 5 shows a top view of a cassette for positioning a reinforcement material according to an alternate embodiment of the invention.

Figure 6 shows a cross sectional view of the cassette taken along line 6-6 of Figure 5.

Figure 7 shows a top view of a cassette for positioning a reinforcement material according to yet another embodiment of the invention.

### DESCRIPTION OF THE PREFERRED EMBODIMENT

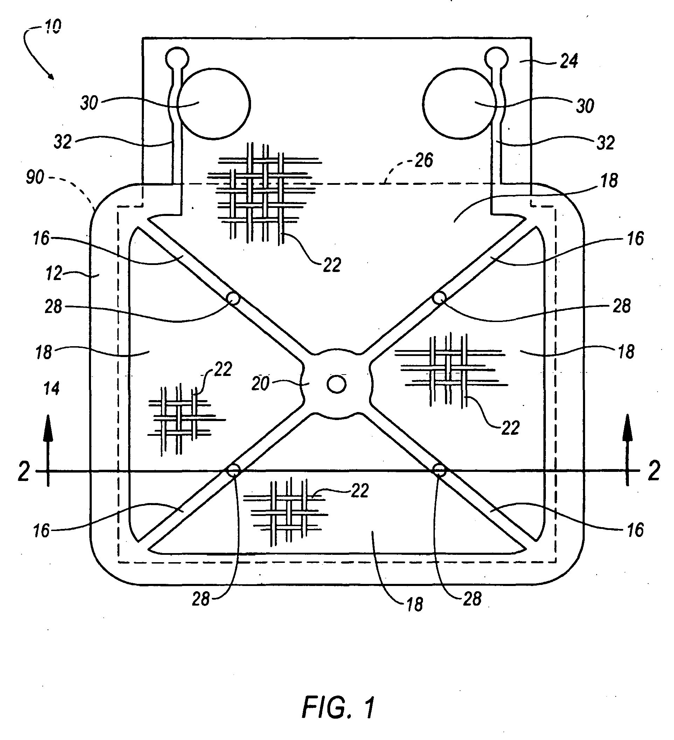

Referring now to Figures 1-4, a cassette 10 is shown according to one embodiment of the invention. The cassette 10 is to be used in conjunction with a trim panel incorporating an inflatable restraint system. The cassette 10 includes a frame member, shown generally at 12, that defines an outer periphery of the cassette 10. The frame member 12 includes at least two opposing sides and is made by any conventional means, such as injection molding a semi-rigid material, such as a plastic material or the like. In the illustrated embodiment of Figure 1, the frame member 12 forms a three-sided "picture frame" structure with a fourth side including an extension area 24 and a hinge line, indicated at 26. The hinge line 26 is the approximate line along which an airbag door would bend open.

The frame member 12 may include one or more feed bars 16 extending inwardly from the frame member 12 to a substantially centrally located feed point 20 to define one or more openings 18 therebetween. The feed point 20 can be at any desired location on the cassette 10. Preferably, the feed bars 16 have a thickness less than a thickness of the frame member 12 to allow injected material that forms the trim panel to fill the openings 18. As seen from the top view of Figure 1, the cassette 10 includes four (4) feed bars 16 that define four (4) openings 18 that define an "X-shape" configuration (when viewed from the top) in which the feed bars 16 extend inwardly from each of the four corners of the frame member 12 and converge at the substantially centrally located feed point 20. It will be appreciated that other configuration are within the contemplation of the invention. For example, the feed bars 16 and the feed point 20 may define a star-shaped configuration or the like. Thus, the frame member 12, the feed bars 16 and the feed point 20 of the cassette 10 form a "spoke and hub" geometric configuration.

The main purpose of the feed bars 16 is to provide a means for locating and positioning one or more spacer lugs 28 at an appropriate location between the frame member 12 and the feed point 20. However, the invention is not limited by the number of feed bars 16 and openings 18, and that the invention can be practiced with any sufficient number of feed bars 16 and openings 18 the feed bars 16 In fact, the invention can be practiced without the use of the feed bars 16 and the feed point 20 by simply providing a pair of opposing frame members 12 having the one or more spacer lugs 28 located thereon.

One aspect of the invention is that a reinforcement material 22, such as a scrim or the like, is encapsulated by the frame member 12 for positioning the reinforcement material 22 at a predetermined location within a mold tool used to form a trim component during an injection molding operation, casting operation, or the like. Although not necessary to practice the invention, the reinforcement material 22 may also be encapsulated by the feed bars 16 and/or the spacer lugs 28. The reinforcement material 22 can be encapsulated by the frame member 12 and/or the spacer lugs 28 by over-molding material during the manufacture of the cassette 10.

In the illustrated embodiment, the reinforcement material 22 extends across the openings 18 between the frame member 12 and the feed bars 16. In addition, the reinforcement material 22 also extends across the hinge line 26 and into the extension area 24 of the cassette 10. The hinge line 26 acts as a tether or hinge during deployment of an airbag door (not shown) when the cassette 10 is used during manufacture of an instrument panel. The reinforcement material 22 and the extension area 24 may include one or more holes 30 for aligning the cassette 10 when the cassette 10 is loaded into a molding tool 50, 52. A pair of arms 32 extending from the frame member 12 may also be provided to position the reinforcement material 22 in the extension area 24. The reinforcement material 22 associated with the extension area 24 can be cut or trimmed in a separate cutting operation.

The reinforcement material 22 can be made of any design or materials known in the art including, but not limited to, metal (e.g. steel straps, steel mesh screen), plastics (e.g. thermoplastics, thermoset plastics, elastomers, plastic mesh screen,) and fibers (e.g. nylon straps, PVC coated nylon scrim, hemp, cotton, woven or non-woven). For example, the reinforcement material 22 can be constructed from strips of tough, strong, flexible, resilient, scrim material formed of resinous plastic fibers, such as that sold under the trademark "NYLON". In another example, the reinforcement material 22 can be made of fabric material. The reinforcement material 22 can be woven with an open weave to form a mesh-like structure.

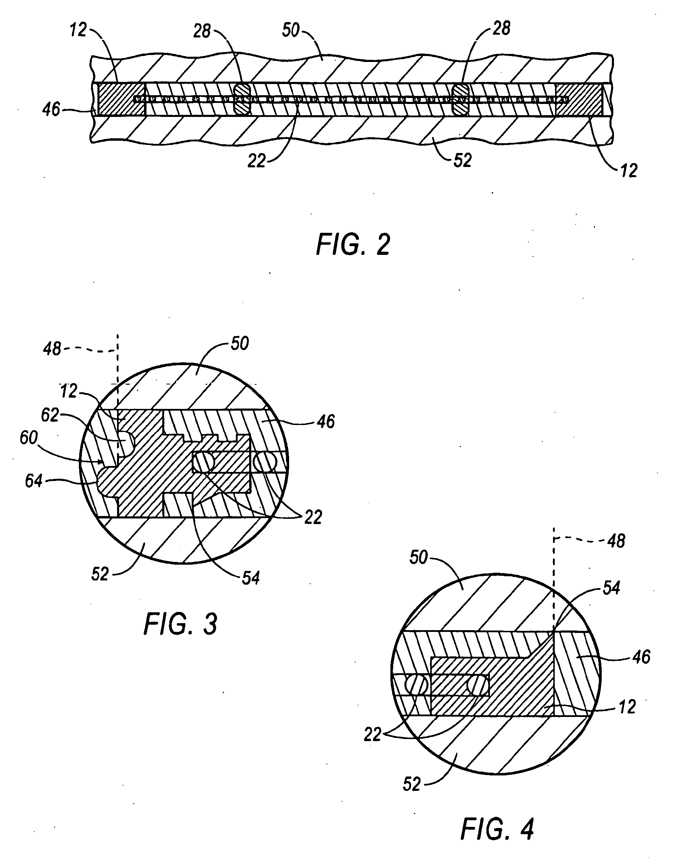

As seen in Fig. 2, the frame member 12 and the spacer lugs 28 position the reinforcement material 22 within a mold tool 50, 52 such that the reinforcement material 22 will be positioned consistently at approximately a mid-plane of a layer 46 of material. The layer 46 of material may be used, for example, as a carrier or substrate of an interior trim panel (not shown), such as an instrument panel. The interior trim panel may be of a multi-layer or single layer construction. The cassette 10 can be entirely or partially embedded in any layer or layers of the interior trim panel. The use of the spacer lugs 28 of the cassette 10 ideally positions the reinforcement material 22 at approximately the mid-plane of the layer 46, unlike conventional methods that position the reinforcement material 22 at either the upper or lower surface of the layer 46. As a result of this mid-plane positioning the reinforcement material 22 within the layer 46, the reinforcement material 22 is positioned at an optimal location with the layer 46 to prevent fragmentation of the instrument panel upon deployment of the airbag. In addition, the cassette 10 of the invention also consistently positions the reinforcement material 22 proximate to an airbag deployment door opening to further prevent fragmentation of the instrument panel upon deployment of the airbag.

However, the invention is not limited by the location at which the reinforcement material 22 is positioned within the layer 46 of the interior trim panel, depending on the type of trim panel. For example, in a simple trim panel comprised of a single layer of material with a textured or grained surface that is visible to the occupant, the reinforcement material 22 can be positioned at a predetermined distance directly within the single layer of material of the interior trim panel. In addition, it will be appreciated that the invention is not limited by the type of molding operation for forming the trim panel, and that the invention can be practiced with any conventional manufacturing process, such as injection molding, casting, or the like.

Referring now to Figures 3 and 4, another aspect of the cassette 10 of the invention is that the combination of the frame member 12 and the layer 46 of material may be designed to form a shear plane 48 at the interface between the frame member 12 and the layer 46 of material. The purpose of the shear plane 48 is to assist in severing the layer 46 upon deployment of the airbag, thereby eliminating or reducing the need for supplemental pre-weakening of the layer 46 of material. One way of forming the shear plane 48 is by using non-compatible molding materials for the frame member 12 and the layer 46 of material. Another way of forming the shear plane 48 is by using compatible molding materials, but forming an incomplete bond between the molding materials. By selectively determining the relative bond strength between the frame member 12 and the layer 46 of material, the shear plane 48 will cause the layer 46 of material to tear at the interface between the frame member 12 and the layer 46 of material when a shear force is applied to the layer 46 of material, such as a shear force generated during the deployment of the airbag. As a result, the shear plane 48 will assist in severing the layer 46 of material at the interface between the layer 46 of material and the frame member 12.

As seen in Fig. 3, the relative bonding strength between the frame member 12 and the layer 46 of material can be selectively determined by a variety of factors. One factor for selectively determining the relative bonding strength between the frame member 12 and the layer 46 of material is by using a mechanical interlock, shown generally at 60. In the illustrated embodiment, the mechanical interlock 60 comprises an inwardly extending concave portion 62 and an outwardly extending convex portion 64. As a result of the mechanical interlock 60, the relative bonding strength between the layer 46 of material and the frame member 12 can be increased as compared to a frame member 12 that does not include the mechanical interlock 60, even though compatible or non-compatible materials are used for the frame member 12 and the layer 46 of material.

As mentioned above, another factor for selectively determining the bonding strength between the frame member 12 and the layer 46 of material is the type of materials used for the layer 46 of material and the frame member 12. For example, the use of non-compatible materials for the frame member 12 and the layer 46 of material will tend to weaken the relative bond strength between the frame member 12 and the layer 46 of material. On the other hand, the use of compatible materials for the frame member 12 and the layer 46 of material will tend to strengthen the relative bond strength between the frame member 12 and the layer 46 of material. However, this increase in the relative bonding strength by using compatible bonding materials can be selectively adjusted by forming an incomplete bond between the materials for the frame member 12 and the layer 46 of material during the manufacturing process for the layer 46 of material.

As described above, the shear plane 48 defines a location at which the layer 46 of material will tear or separate during deployment of the airbag. As seen in Fig. 4, the frame member 12 may also include a knife edge 54 to further assist in severing any other layers of material above the layer 46 of material upon deployment of the airbag. In addition, the knife edge 54 may be fully embedded within the layer 46 of material to assist in severing the layer 46 of material. Preferably, the knife edge 54 is located on an outer surface of the frame member 12 and substantially on a peripheral upper edge of the frame member 12. The knife edge 54 is substantially aligned with the shear plane 48 such that the knife edge 54 further assists in the separation or tearing of material located above the frame member 12. This aspect of the invention may be particularly useful in multi-layer applications. For example, when the layer 46 of material is used in an instrument panel with other layers of material, such as a foam layer, a covering layer, or the like, the knife edge 54 assists in severing or separating any such layers of material upon deployment of the airbag, thereby minimizing or eliminating the need to perform a secondary pre-weakening operation. As a result, the cost of manufacturing the instrument panel is significantly reduced.

It will be appreciated that the shear plane 48 may be used in conjunction with alternative methods of promoting tearing of the layers of materials of the instrument panel. Because the shear plane 48 is located proximate to the reinforcement material 22, the cassette 10 of the invention consistently positions the reinforcement material 22 proximate to the tear seam pattern for the deployment of the airbag, thereby minimizing the fragmentation of the instrument panel upon deployment of the airbag.

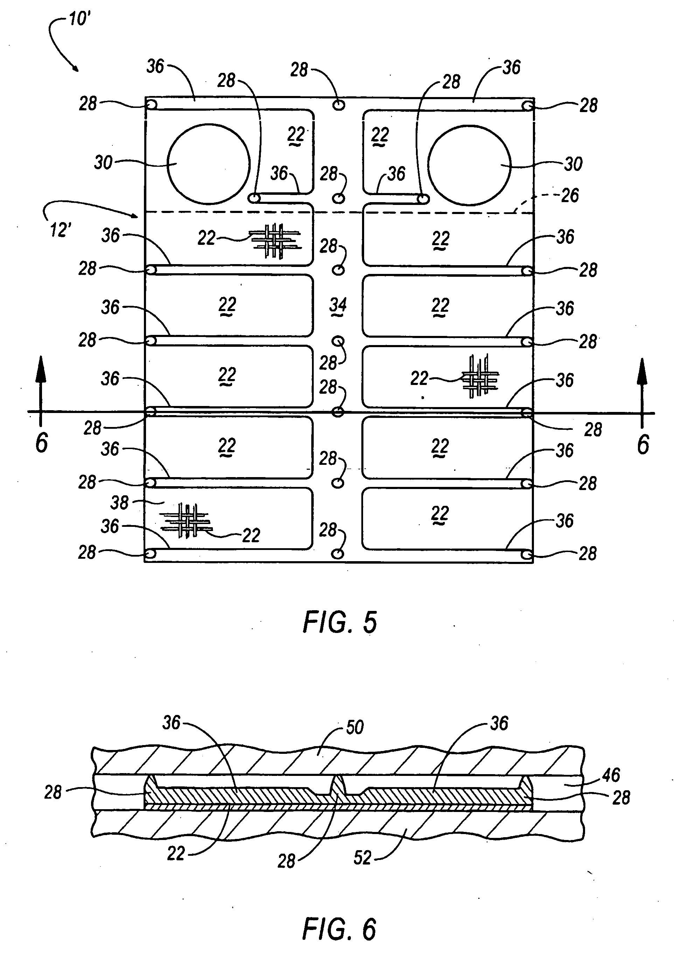

As mentioned above, the cassette 10 of the invention is not limited by a particular geometric configuration. For example, a cassette 10' of the invention may comprise a "rib and backbone" geometric configuration, as shown in Figures 5 and 6. The cassette 10' includes a backbone or spine 34 and one or more ribs 36 extending laterally from the spine 34 to define openings 38 therebetween. Unlike the cassette 10, the cassette 10' does not include a frame member 12, but rather the reinforcement material 22 of the cassette 10' is encapsulated within the spine 34 and the ribs 36 by overmolding material. As a result, the cassette 10' is particularly useful in situations in which a folding of the airbag during deployment is desirable in order to minimize damage to the windscreen (not shown) or other parts of the vehicle. Specifically, the laterally extending ribs 36 provide a flexible support structure for the reinforcement material 22 that promotes folding of the cassette 10' without complete separation of the cassette 10'.

As seen in Figure 6, similar to the cassette 10, the cassette 10' can consistently position the reinforcement material 22 at any desirable predetermined location within the layer 46 of material, such as a carrier or substrate material, of an interior trim panel. In the illustration of Figure 6, the reinforcement material 22 is located proximate to the mold 52 and farthest from the mold 50 such that the reinforcement material 22 is located toward an interior surface or "B" surface of the layer 46 of material when the interior trim panel is installed. By ensuring consistently positioning the reinforcement material 22 proximate to the layer of material 40 forming the "B" surface of the interior trim panel, "read-through" of the reinforcement material 22 through the opposite surface or "A" surface is minimized.

As described above, the cassette 10, 10' of the invention can consistently position the reinforcement material 22 at a predetermined location within the layer 46 of material forming an interior trim panel. In the case where the interior trim panel is an instrument panel, the cassette 10,10' can consistently position the reinforcement material 22 within the region defining the airbag door such that the reinforcement material 22 is consistently positioned proximate to the tear seam pattern that assists in the deployment of the airbag.

It will be appreciated that the cassette 10, 10' of the invention can also be utilized to consistently position the reinforcement material 22 in a region outside the airbag door opening, but proximate to the tear seam pattern to further assist in minimizing fragmentation of the interior trim panel upon deployment of the airbag. It is contemplated by the inventor of the present invention that positioning the reinforcement material 22 proximate to the tear seam pattern outside the airbag door opening can be accomplished in a variety of different ways.

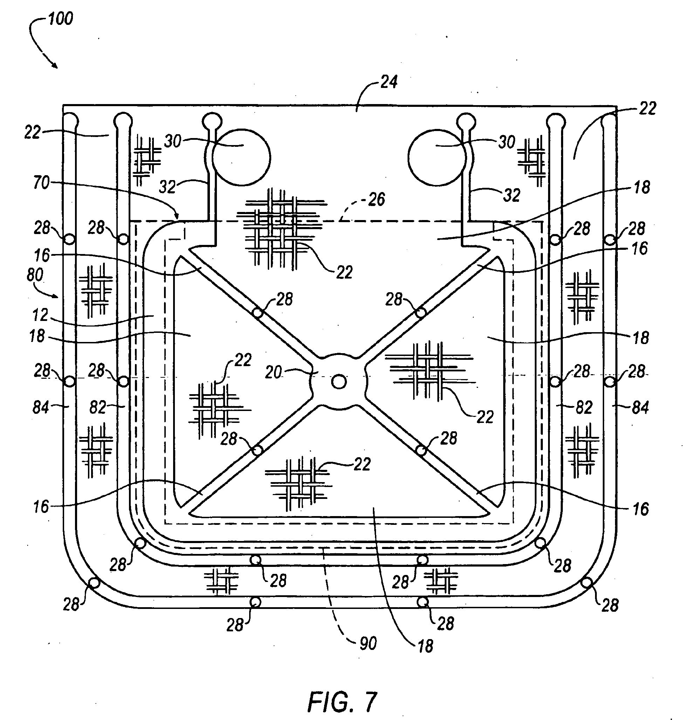

Referring now to Figure 7, a cassette 100 according to an alternative embodiment of the invention. The cassette 100 comprises a "frame within a frame" construction and includes an inner cassette member, shown generally at 70, and an outer cassette member, shown generally at 80. In the illustrated embodiment, the inner cassette member 70 is substantially identical to the cassette 10 described above. However, it will be appreciated that the invention is not limited by the configuration of the inner cassette-member 70, and that the invention can be practiced with other configurations. For example, the inner cassette member 70 can comprise the cassette 10' as described above.

The outer cassette member 80 includes an inner frame member 82 and an outer frame member 84. The reinforcement material 22 is secured between the inner and outer frame members 82, 84 by over-molding material when forming the frame members 82, 84, similar to the manner in which the reinforcement material 22 is secured to the frame member 12 of the cassette 10. The inner and outer frame members 82, 84 may include one or more spacer lugs 28 to position the reinforcement material 22 at a predetermined location within the layer 46 of the trim panel, similar to the cassette 10.

One aspect of the cassette 100 of the invention is that the reinforcement material 22 is positioned not only at a predetermined location within the layer 46 within the airbag door, but also outside of a tear seam 90 to prevent or eliminate fragmentation of the trim panel upon deployment of the airbag. It should be noted that the tear seam 90 can be located at the intersection of the frame member 12 of the inner cassette member 70 and the layer 46 of material, or at the intersection of the inner frame member 82 of the outer cassette member 80 and the layer 46 of material by the using the shear plane 48 as described above. Alternatively, the tear seam 90 can be located between the frame member 12 of the inner cassette member 70 and the inner frame member 82 of the outer cassette member 80 without the use of the shear plane 48, as shown in Figure 7.

As described above, the reinforcement material 22 provides reinforcement and prevents fragmentation of the trim panel during the deployment of the airbag door by being located within and proximate to the area defining the opening for the deployment of the airbag door. In addition, the reinforcement material 22 can be located both within and outside the area defining the opening for the deployment of the airbag door to provide additional prevention of the fragmentation of the trim panel. Further, the shear plane 48 can be positioned to provide any desirable pre-weakening tear seam pattern. For example, the shear plane 48 can be in a star-shape pattern, or the like. However, it will be appreciated that the invention can be practiced with or without the shear plane 48 to assist in the deployment of the air bag door.

## Claims

1. A cassette (10, 10', 100), comprising:
a frame member (12) having at least two sides interconnected by a cross member (16); and
a reinforcement material (22) at least partially encapsulated by and suspended by the at least two sides of said frame member (12), **characterized by** said reinforcement material (22) extending across a hinge line (26) and into an extension area (24), said reinforcement material (22) in said extension area (24) having one or more holes for aligning the cassette (10) such that the reinforcement material (22) is positioned at a predetermined location when said cassette (10, 10', 100) is placed in a mold tool (50, 52).

2. The cassette of Claim 1, further comprising a knife edge (54) on the frame member (12).

3. The cassette of Claim 1, wherein said frame member (12) includes a spacer lug (28) for positioning said reinforcement material (22) at the predetermined location within the mold tool.

4. The cassette of Claim 1, wherein the at least two sides are two opposing sides, and wherein the reinforcement material (22) is secured to the two opposite sides of the frame member (12).

5. The cassette of Claim 1, further comprising an outer cassette member (80) for positioning the reinforcement material (22) outside a tear seam (90) of a trim panel.

6. An interior trim panel, comprising:
a layer (46) of material, and
a cassette (10, 10', 100) disposed within the layer of material the cassette including a frame member (12) having at least two sides interconnected by a cross member (16) and a reinforcement material (22) at least partially encapsulated by and suspended by the at least two sides of said frame member (12), **characterized by** said reinforcement material (22) extending across a hinge line (26),
wherein the reinforcement material (22) is positioned at a predetermined location within the layer of material relative to an airbag,
and the layer (46) of material tears from the frame member (12) as the frame member (12) hinges about the hinge line (26) upon deployment of the airbag.

7. The interior trim panel of Claim 6, further comprising a shear plane (48) defined at an interface between the frame member (12) and the layer (46) of material, and said layer (46) of material tears along said shear plane (48).

8. The interior trim panel of Claim 6, wherein the cassette further comprises at least one spacer lug (28) for positioning the reinforcement material (22).

9. The interior trim panel of Claim 6, wherein the frame member (12) includes two opposing sides, and wherein the reinforcement material (22) is secured to the two opposite sides of the frame member (12).

## Patentansprüche

1. Kassette (10, 10', 100), umfassend:
ein Rahmenelement (12), das mindestens zwei durch ein Querelement (16) untereinander verbundene Seiten aufweist; und
ein Verstärkungsmaterial (22), das von den mindestens zwei Seiten des Rahmenelements (12) mindestens teilweise umschlossen und daran aufgehängt ist, **dadurch gekennzeichnet, dass**
sich das Verstärkungsmaterial (22) über eine Scharnierlinie (26) und in einen Erweiterungsbereich (24) erstreckt, wobei das Verstärkungsmaterial (22) in dem Erweiterungsbereich (24) eine oder mehrere Öffnungen aufweist, um die Kassette (10) so auszurichten, dass das Verstärkungsmaterial (22) an einer vorbestimmten Stelle positioniert wird, wenn die Kassette (10, 10', 100) in ein Formwerkzeug (50, 52) gelegt wird.

2. Kassette nach Anspruch 1, weiter umfassend eine Messerkante (54) auf dem Rahmenelement (12).

3. Kassette nach Anspruch 1, bei der das Rahmenelement (12) einen Abstandhaltervorsprung (28) einschließt, um das Verstärkungsmaterial (22) an der vorbestimmten Stelle innerhalb des Formwerkzeugs zu positionieren.

4. Kassette nach Anspruch 1, bei der die mindestens zwei Seiten zwei entgegensetzte Seiten sind, und bei der das Verstärkungsmaterial (22) an den zwei entgegengesetzten Seiten des Rahmenelements (12) befestigt ist.

5. Kassette nach Anspruch 1, weiter umfassend ein äußeres Kassettenelement (80) zum Positionieren des Verstärkungsmaterials (22) außerhalb einer Reißnaht (90) eines Verkleidungspaneels.

6. Innenverkleidungspaneel, umfassend:
eine Materialschicht (46), und
eine innerhalb der Materialschicht angeordnete Kassette (10, 10', 100), wobei die Kassette ein Rahmenelement (12) einschließt, das mindestens zwei durch ein Querelement (16) untereinander verbundene Seiten aufweist, sowie ein Verstärkungsmaterial (22), das von den mindestens zwei Seiten des Rahmenelements mindestens teilweise umschlossen und daran aufgehängt ist, **dadurch gekennzeichnet, dass** sich das Verstärkungsmaterial (22) über eine Scharnierlinie (26) erstreckt, wobei das Verstärkungsmaterial (22) in Bezug zu einem Airbag an einer vorbestimmten Stelle innerhalb der Materialschicht angeordnet ist,
und die Materialschicht (46) vom Rahmenelement (12) abreißt, wenn das Rahmenelement (12) bei der Entfaltung des Airbag um die Scharnierlinie (26) schwingt.

7. Innenverkleidungspaneel nach Anspruch 6, weiter umfassend eine Scherebene (48), die an einer Grenzfläche zwischen dem Rahmenelement (12) und der Materialschicht (46) gebildet wird, und wobei die Materialschicht (46) entlang der Scherebene (48) reißt.

8. Innenverkleidungspaneel nach Anspruch 6, bei dem die Kassette weiter mindestens einen Abstandhaltervorsprung (28) zum Positionieren des Verstärkungsmaterials (22) umfasst.

9. Innenverkleidungspaneel nach Anspruch 6, bei dem das Rahmenelement (12) zwei entgegengesetzte Seiten einschließt, und bei dem das Verstärkungsmaterial (22) an den zwei entgegengesetzten Seiten des Rahmenelements (12) befestigt ist.

## Revendications

1. Cassette (10, 10', 100), comprenant :
un élément structurel (12) possédant au moins deux parois qui sont interconnectées par un élément transversal (16) ; et
un matériau de renforcement (22) au moins partiellement encapsulé et suspendu par les deux parois dudit élément structurel (12), **caractérisé par**
ledit matériau de renforcement (22) s'étendant transversalement par rapport à une ligne de charnière (26) et dans une zone d'extension (24), ledit matériau de renforcement (22) dans ladite zone d'extension (24) possédant un ou plusieurs orifices destinés à aligner la cassette (10), de sorte que le matériau de renforcement (22) soit positionné selon un endroit prédéterminé lorsque ladite cassette (10, 10', 100) est placée dans un outil à mouler (50, 52).

2. Cassette selon la revendication 1, comprenant en outre une arête vive (54) située sur l'élément structurel (12).

3. Cassette selon la revendication 1, dans laquelle ledit élément structurel (12) comprend un tenon d'espacement (28) destiné à positionner ledit matériau de renforcement (22) selon l'endroit prédéterminé dans l'outil à mouler.

4. Cassette selon la revendication 1, dans laquelle les au moins deux parois sont deux parois opposées, et dans laquelle le matériau de renforcement (22) est attaché aux deux parois opposées de l'élément structurel (12).

5. Cassette selon la revendication 1, comprenant en outre un élément de cassette extérieur (80) destiné à positionner le matériau de renforcement (22) à l'extérieur d'un cordon d'arrachage (90) d'un panneau de garniture.

6. Panneau de garniture interne, comprenant :
une couche (46) de matériau, et
une cassette (10, 10', 100) disposée à l'intérieur de la couche de matériau, la cassette incluant un élément structurel (12) qui possède au moins deux parois interconnectées par un élément transversal (16) et un matériau de renforcement (22) qui est au moins partiellement encapsulé et suspendu par les deux parois dudit élément structurel (12), **caractérisé par**
ledit matériau de renforcement (22) s'étendant transversalement par rapport à une ligne de charnière (26),
dans lequel ledit matériau de renforcement (22) est positionné selon un endroit prédéterminé à l'intérieur de la couche de matériau par rapport à un coussin d'air à gonflage instantané,
et la couche (46) de matériau s'arrache de l'élément structurel (12) au fur et à mesure que l'élément structurel (12) s'articule vis - à - vis de la ligne de charnière (26) lors du déploiement du coussin d'air à gonflage instantané.

7. Panneau de garniture interne selon la revendication 6, comprenant en outre un plan de cisaillement (48) défini au niveau d'une interface située entre l'élément structurel (12) et la couche (46) de matériau, ladite couche (46) de matériau se cisaillant le long dudit plan de cisaillement (48).

8. Panneau de garniture interne selon la revendication 6, dans lequel ladite cassette comprend en outre au moins un tenon d'espacement (28) destiné à positionner le matériau de renforcement (22).

9. Panneau de garniture interne selon la revendication 6, dans lequel l'élément structurel (12) possède deux parois opposées, et dans lequel le matériau de renforcement (22) est attaché aux deux parois opposées de l'élément structurel (12).
